(19) Europäisches Patentamt
European Patent Office
Office européen des brevets

(11) **EP 2 684 626 B1**

(12) **EUROPEAN PATENT SPECIFICATION**

(45) Date of publication and mention of the grant of the patent:
**05.06.2019 Bulletin 2019/23**

(21) Application number: **12754846.9**

(22) Date of filing: **06.03.2012**

(51) Int Cl.:
*B21K 1/05* (2006.01)     *B21D 39/00* (2006.01)
*B21J 9/02* (2006.01)     *B60B 35/02* (2006.01)
*F16C 19/18* (2006.01)     *F16C 33/64* (2006.01)
*F16C 43/04* (2006.01)

(86) International application number:
**PCT/JP2012/055673**

(87) International publication number:
**WO 2012/121246 (13.09.2012 Gazette 2012/37)**

(54) **MANUFACTURING METHOD FOR WHEEL ROLLER BEARING DEVICE**

HERSTELLUNGSVERFAHREN FÜR EINE RADWÄLZLAGERVORRICHTUNG

PROCÉDÉ DE FABRICATION POUR DISPOSITIF DE ROULEMENT À ROULEAUX DE ROUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2011 JP 2011048905**
**01.02.2012 JP 2012019691**

(43) Date of publication of application:
**15.01.2014 Bulletin 2014/03**

(73) Proprietor: **JTEKT CORPORATION**
**Osaka-shi,**
**Osaka 542-8502 (JP)**

(72) Inventors:
• **OHASHI, Atsushi**
**Osaka-shi**
**Osaka 542-8502 (JP)**

• **SHIMIZU, Kouichi**
**Osaka-shi**
**Osaka 542-8502 (JP)**
• **MASUDA, Yoshinori**
**Osaka-shi**
**Osaka 542-8502 (JP)**
• **NAKAO, Motonori**
**Osaka-shi**
**Osaka 542-8502 (JP)**

(74) Representative: **Winter, Brandl, Fürniss, Hübner, Röss, Kaiser, Polte - Partnerschaft mbB Patent- und Rechtsanwaltskanzlei**
**Alois-Steinecker-Strasse 22**
**85354 Freising (DE)**

(56) References cited:
**JP-A- 57 206 544     JP-A- 57 206 544**
**JP-A- 2002 250 358     JP-A- 2007 255 487**
**JP-A- 2007 268 690     JP-A- 2011 017 051**

**Description**

Technical Field

The present invention relates to a method of manufacturing a wheel rolling bearing device in which rolling elements, an outer ring, and an inner ring are assembled to a shaft member of the wheel rolling bearing device, and more particularly, to a caulking method for securing the inner ring which has been assembled to the shaft member of the wheel rolling bearing device.

Background Art

The wheel rolling bearing device (a so-called wheel hub unit) and the method of manufacturing the wheel rolling bearing device are disclosed, for example, in Patent Documents 1 and 2.

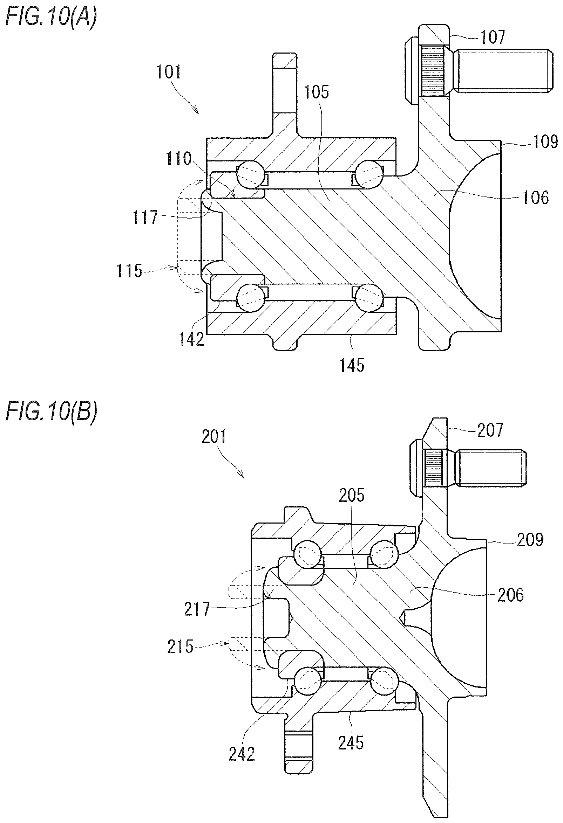

In the conventional method of manufacturing a wheel rolling bearing device 101 as shown in Fig. 10(A), which is disclosed in Patent Document 1, a shaft member 106 (having a fitting shaft portion 109, a flange portion 107, and a shaft portion 105) of the wheel rolling bearing device is integrally formed by cold forging, and a hollow cylindrical portion 115 (shown by a dotted line) for securing an inner ring 142 with a caulked portion 117 is formed at one end of the shaft portion 105. After the inner ring 142 has been fitted to the cylindrical portion 115, the cylindrical portion 115 is caulked outward in a radial direction thereby to form the caulked portion 117, and thus, the inner ring 142 is secured.

Moreover, in the conventional wheel rolling bearing device 201 as shown in Fig. 10(B), which is disclosed in Patent Document 2, a hollow cylindrical portion 215 (shown by a dotted line) for securing an inner ring 242 with a caulked portion 217 is formed at one end of a shaft member 206 of the wheel rolling bearing device by turning. After the inner ring 242 has been fitted to the cylindrical portion 215, the cylindrical portion 215 is caulked outward in a radial direction thereby to form the caulked portion 217, and thus, the inner ring 242 is secured.

Prior Art Document

Patent Document

    Patent Document 1: JP-A-2006-111070
    Patent Document 2: JP-A-2007-268690

Document JP 2001 017051 A discloses the features of the preamble of claim 1.

Summary of the Invention

Problems that the Invention is to Solve

According to the prior art disclosed in Patent Document 1, the cylindrical portion 115 to which the inner ring 142 is fitted is formed by a forward extrusion process in cold forging. Therefore, the cylindrical portion must be formed into a shape of a mold, and the mold tends to be complicated.

Moreover, according to the prior art disclosed in Patent Document 2, the cylindrical portion 215 to which the inner ring 242 is fitted is formed by turning, and equipments, time, and cost for the turning work are incurred. Additionally, an internal finishing work for the cylindrical portion is required, in some cases, and there is such possibility that the equipments, time, and cost are further incurred.

Moreover, both the caulked portion 117 (See Fig. 10(A)) in Patent Document 1 and the caulked portion 217 (See Fig. 10 (B)) in Patent Document 2 have a hollow shape in their center portions, because they are formed by caulking the cylindrical portion. Therefore, rigidity of the caulked portions is low.

The invention has been made in view of the above described points, and an object of the invention is to provide a method of manufacturing a wheel rolling bearing device capable of manufacturing the wheel rolling bearing device using a simpler mold with higher efficiency, and capable of further enhancing rigidity of a caulked portion for securing an inner ring which is fitted to one end of a shaft portion.

Means for Solving the Problems

In order to solve the above described problems, a method of manufacturing a wheel rolling bearing device according to claim 1 is provided.

Advantage of the Invention

According to the invention, the caulked portion for securing the inner ring which is fitted to one end of the shaft portion of the wheel rolling bearing device by caulking is formed in a simple columnar shape, before caulking, but not in a relatively complicated cylindrical shape. Therefore, it is possible to manufacture the wheel rolling bearing device, using a simpler mold with higher efficiency.

Moreover, there is no necessity of machining the caulked portion into a cylindrical shape before caulking, and therefore, it is possible to manufacture the wheel rolling bearing device with higher efficiency.

Further, because the shaft portion in a solid columnar shape is enlarged in diameter by caulking, a center portion of the caulked portion is not formed hollow, and therefore, rigidity of the caulked portion can be further enhanced.

Brief Description of the Drawings

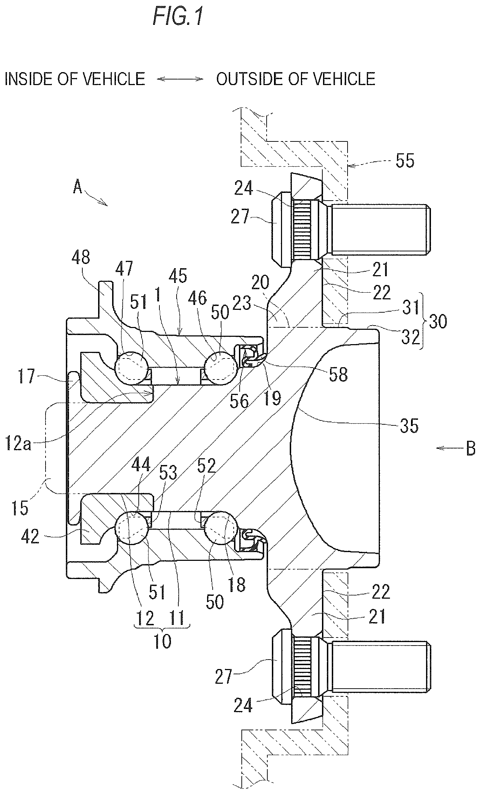

Fig. 1 is a sectional view taken along an axial direction (a sectional view along a rotation axis of a shaft portion 10) showing a wheel rolling bearing device A in a state where a shaft member 1, an inner ring 42, an outer ring 45, first rolling elements 50, and second rolling elements 51 of the wheel rolling bearing device are assembled.

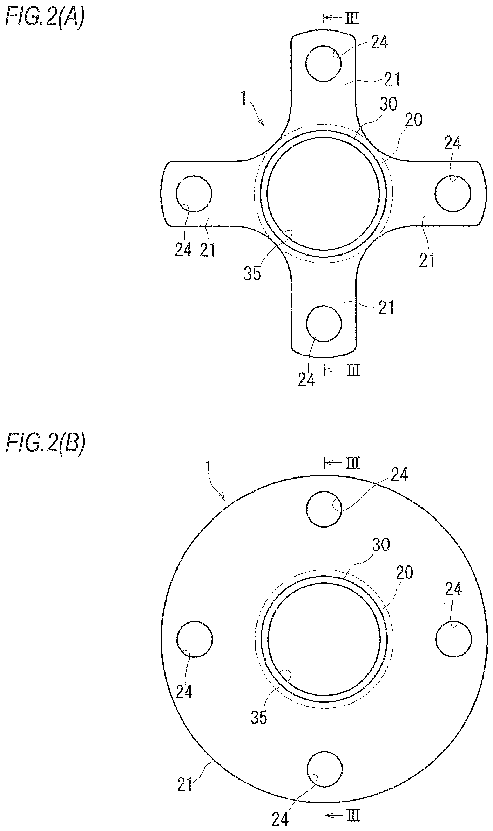

Figs. 2(A) and 2(B) are views of the shaft member 1 of the wheel rolling bearing device which is shown in Fig. 1, as seen from a direction B, in which Fig. 2(A) is a view for explaining an example of a plurality of flange portions 21 which are extended outward in a radial direction, and Fig. 2(B) is a view for explaining an example of a flange portion 21 which is extended outward in the radial direction in a disc-like shape .

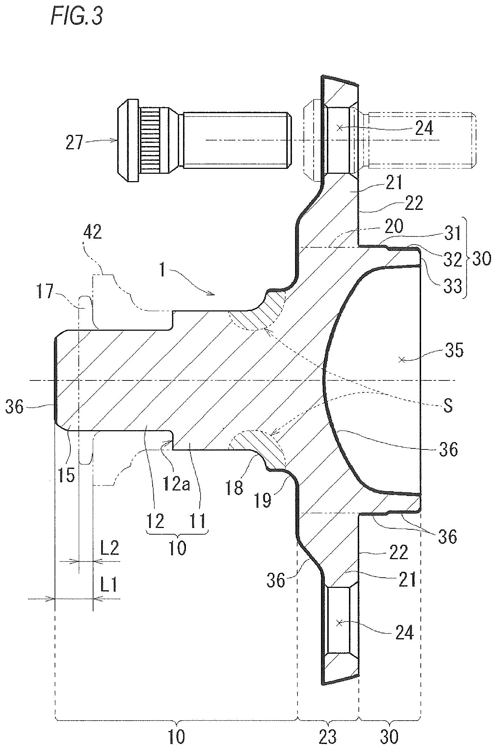

Fig. 3 is a sectional view taken along the axial direction of the shaft member 1 of the wheel rolling bearing device (a sectional view along the rotation axis of the shaft portion 10) .

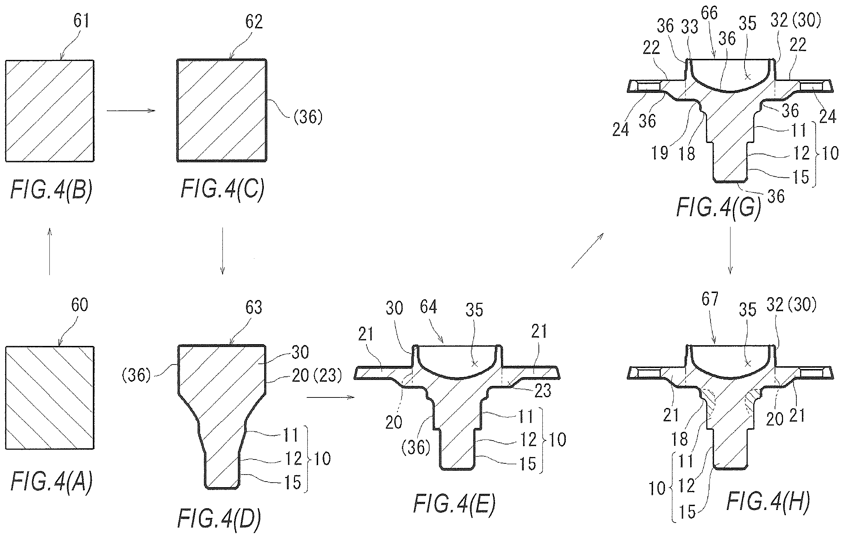

Figs. 4(A) to 4 (H) are views showing changes of material in shape through steps (A) to (H) for forming the shaft member of the wheel rolling bearing device from a shaft-shaped material 60.

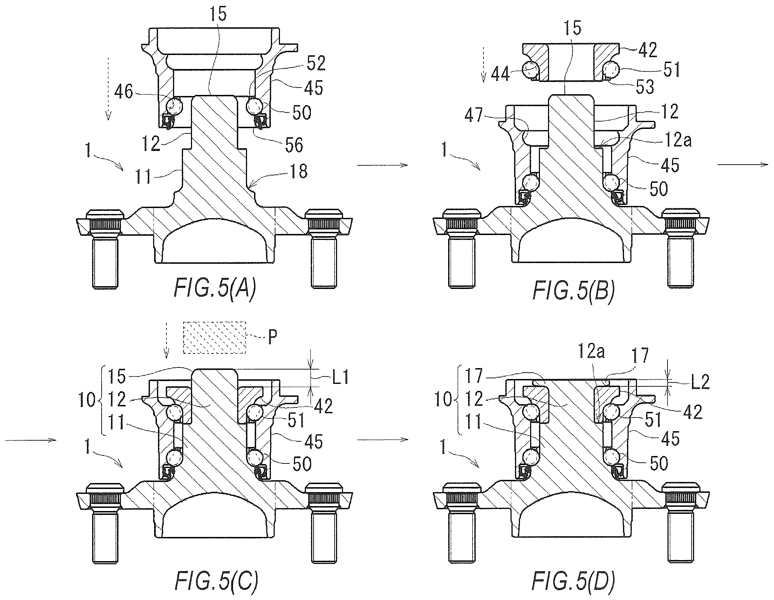

Fig. 5(A) is a view for explaining an outer ring assembling step, Fig. 5(B) is a view for explaining an inner ring assembling step, Fig. 5(C) is a view for explaining a caulking step, and Fig. 5 (D) is a view for explaining the wheel rolling bearing device A which has been assembled.

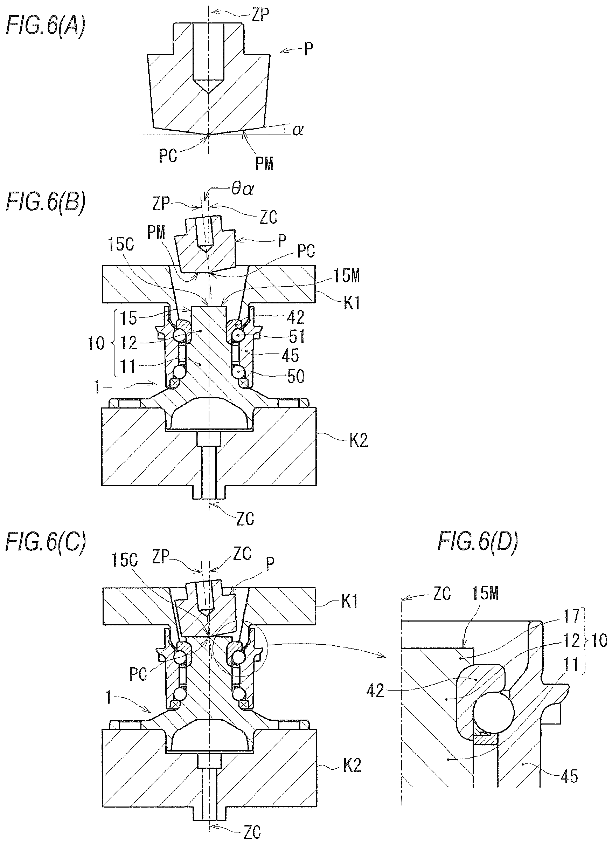

Figs. 6(A) to 6(B) are views for explaining a first embodiment for caulking a shaft end portion 15 which is not part of the invention, in which Fig. 6(A) is a sectional view of a caulking jig P, Fig. 6(B) is a sectional view showing a face 15M to be caulked, in a state before caulking in the caulking step, Fig. 6(C) is a sectional view showing the face 15M to be caulked, in a state after caulking in the caulking step, and Fig. 6(D) is an enlarged view of a region surrounding an edge portion of the face 15M to be caulked in Fig. 6(C).

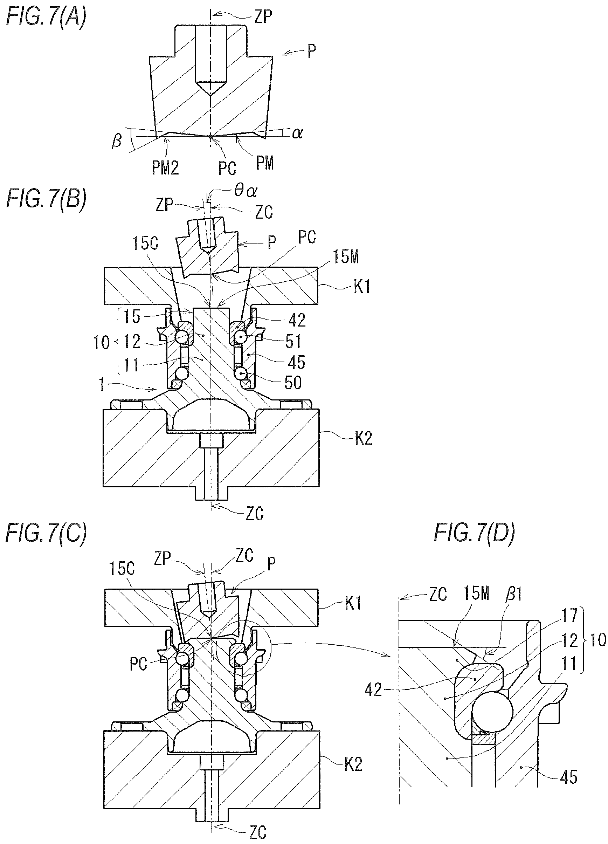

Figs. 7(A) to 7(D) are views for explaining a second embodiment for caulking the shaft end portion 15, in which Fig. 7(A) is a sectional view of a caulking jig P, Fig. 7(B) is a sectional view showing the face 15M to be caulked, in a state before caulking in the caulking step, Fig. 7 (C) is a sectional view showing the face 15M to be caulked, in a state after caulking in the caulking step, and Fig. 7(D) is an enlarged view of a region surrounding the edge portion of the face 15M to be caulked in Fig. 7(C).

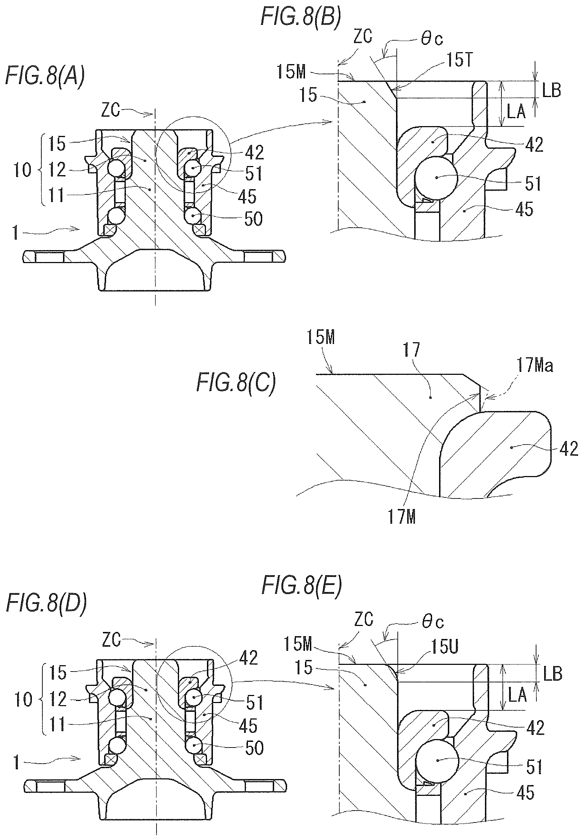

Figs. 8(A) to 8(E) are views for explaining a third embodiment for caulking the shaft end portion 15, in which Fig. 8(A) is a sectional view showing the face 15M to be caulked (the edge portion is chamfered), in a state before caulking in the caulking step, Fig. 8(B) is an enlarged view showing the region surrounding the edge portion of the face 15M to be caulked (the edge portion is chamfered) in Fig. 8(A) before caulking, and Fig. 8(C) is an enlarged view showing the region surrounding the edge portion of the face 15M to be caulked (the edge portion is chamfered) after caulking. Moreover, Fig. 8(D) is a sectional view showing the face 15M to be caulked (the edge portion has a convex curved shape), in a state before caulking, and Fig. 8(E) is an enlarged view of the region surrounding the edge portion of the face 15M to be caulked (the edge portion has the convex curved shape) in Fig. 8(D), in the state before caulking.

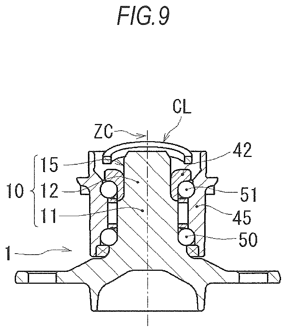

Fig. 9 is a view for explaining a fourth embodiment for caulking the shaft end portion 15.

Fig. 10(A) is a sectional view of a conventional wheel rolling bearing device 101 (a first example) taken along an axial direction, and Fig. 10 (B) is a sectional view of another conventional wheel rolling bearing device 201 (a second example) taken along an axial direction.

Mode for Carrying Out the Invention

Now, modes for carrying out the invention will be described referring to the drawings. Fig. 1 is a sectional view taken along an axial direction (a sectional view along a rotation axis of a shaft portion 10) showing the wheel rolling bearing device A which has been manufactured in the method of manufacturing the wheel rolling bearing device according to the invention.

[Entire structure of the wheel rolling bearing device (Fig. 1)]

Then, an entire structure of the wheel rolling bearing device will be described referring to Fig. 1.

As shown in Fig. 1, the wheel rolling bearing device A (a so-called wheel hub unit) includes a shaft member 1, an outer ring 45, an inner ring 42, first rolling elements 50, second rolling elements 51, and so on.

The shaft member 1 (a so-called hub wheel) integrally includes a shaft portion 10, a fitting shaft portion 30, a flange base portion 20, and a flange portion 21.

In a state where the wheel rolling bearing device A is mounted on a vehicle, the shaft portion 10 is positioned inside the vehicle, and the fitting shaft portion 30 is positioned outside the vehicle. It is to be noted that an inside of the vehicle is shown at a left side in Fig. 1, while an outside of the vehicle is shown at a right side in Fig. 1.

The shaft portion 10 has a substantially columnar shape. At an opposite side to the fitting shaft portion 30, the shaft portion 10 is provided with a large diameter shaft portion 11 having a larger diameter at a side close to the flange portion 21, and a small diameter shaft portion 12 having a smaller diameter than the large diameter shaft portion 11 at the other end remote from the flange portion 21. Moreover, in a stepped portion between the large diameter shaft portion 11 and the small diameter shaft portion 12, there is formed an inner ring butting face 12a, which is a face perpendicular to a rotation axis of the shaft portion 10.

The flange base portion 20 is positioned between the above described shaft portion 10 and the fitting shaft portion 30, which will be described below, and a plurality of flange portions 21 which are extended outward in a radial direction (See Fig. 2 (A)) are formed on an outer peripheral face of the flange base portion 20. A plurality of the flange portions 21 are respectively provided with bolt holes 24 into which hub bolts 27 for tightening a wheel are inserted by press fitting.

In the following embodiments, the shaft member of the wheel rolling bearing device having such a shape that a plurality of the flange portions 21 are extended outward in the radial direction as shown in Fig. 2 (A) will be described as an example. However, the number of the flange portions 21 is not limited to four. The flange portion 21 may be extended outward in the radial direction in a disc-like shape, as shown in Fig. 2(B).

The fitting shaft portion 30 is formed in a substantially cylindrical shape coaxially with the shaft portion 10, continuously from the one end of the shaft portion 10 (at the opposite side to the small diameter portion 12), and a center hole of a wheel (not shown) is adapted to be fitted to the fitting shaft portion 30.

The fitting shaft portion 30 is provided with a brake rotor fitting portion 31, at a side close to the flange portions 21, and a wheel fitting portion 32 having a slightly smaller diameter than the brake rotor fitting portion 31, at a distal end side.

Moreover, a face surrounding a center hole of a brake rotor 55 is butted against rotor supporting faces 22 which are faces of the flange portions 21 at the side close to the fitting shaft portion 30, as shown in Fig. 1.

Further, in the shaft member 1 of the wheel rolling bearing device, the fitting shaft portion 30, an intermediate shaft portion 23, and the shaft portion 10 are coaxially formed along the direction of the rotation axis, as shown in Fig. 3. The intermediate shaft portion 23 includes the flange base portion 20 and the flange portions 21.

Still further, a forged recess 35 in a concave shape is formed radially inwardly in the fitting shaft portion 30.

Moreover, a first inner ring raceway face 18 which constitutes one of bearing portions in a double row angular ball bearing, as the rolling bearing, is formed in a part of an outer peripheral face of the large diameter shaft portion 11 near a boundary to the flange portions 21 (the flange base portion 20), continuously in a circumferential direction.

Further, a seal face 19 (an adjacent outer peripheral face), which will be described below, is formed continuously in the circumferential direction, adjacent to the first inner ring raceway face 18, in a part of the outer peripheral face of the large diameter shaft portion 11 at a side close to the flange portions 21.

Moreover, the inner ring 42 having a second inner ring raceway face 44 which is formed continuously in the circumferential direction is fitted to an outer peripheral face of the small diameter shaft portion 12. The inner ring 42 is fitted until it is butted against the inner ring butting face 12a.

Then, a protruded portion of the small diameter shaft portion 12 protruded from the inner ring 42 (the shaft end portion 15 in Fig. 1) is caulked outward in the radial direction thereby to form a caulked portion 17, and the inner ring 42 is secured between the caulked portion 17 and the inner ring butting face 12a.

The outer ring 45 is disposed on an outer peripheral face of the shaft portion 10 of the shaft member 1 of the wheel rolling bearing device, keeping an annular space between them.

A first outer ring raceway face 46 opposed to the first inner ring raceway face 18 which is formed on the shaft member 1, and a second outer ring raceway face 47 opposed to the second inner ring raceway face 44 which is formed on the inner ring 42 are formed on an inner peripheral face of the outer ring 45. The inner ring raceway faces and the outer ring raceway faces are so formed as to continue in the circumferential direction in their respective faces.

A plurality of the first rolling elements 50 are disposed so as to roll between the first inner ring raceway face 18 and the first outer ring raceway face 46, and held by a cage 52. Moreover, a plurality of the second rolling elements 51 are disposed so as to roll between the second inner ring raceway face 44 and the second outer ring raceway face 47, and held by a cage 53.

A preload in the axial direction is applied to a plurality of the first rolling elements 50 and a plurality of the second rolling elements 51, based on a caulking force when the caulked portion 17 is formed by caulking the end of the small diameter shaft portion 12, thereby to compose the angular ball bearing.

A vehicle side flange 48 is integrally formed on an outer peripheral face of the outer ring 45. The vehicle side flange 48 is fastened to a mounting face of a vehicle side member such as a knuckle, a carrier and so on which is held by a suspension device (not shown) of the vehicle, with bolts or the like.

Moreover, a seal member 56 is assembled by press fitting to an inner peripheral face of an opening of the outer ring 45 adjacent to the first outer ring raceway face 46. A tip end of a lip 58 of the seal member 56 is in sliding contact (gets in touch) with the seal face 19 (corresponding to the adjacent outer peripheral face) thereby to seal a gap between the outer ring 45 and the shaft member 1 of the wheel rolling bearing device.

It is to be noted that the seal face 19 is formed adjacent to the first inner ring raceway face 18, in a part of the outer peripheral face of the shaft portion, at a side close to the flange portions 21 (the flange base portion 20), continuously in the circumferential direction.

[Structure of the shaft member of the wheel rolling bearing device, and the method of manufacturing the wheel rolling bearing device, using the shaft member of the wheel rolling bearing device (Figs. 2(A) to 5(D))]

Then, referring to Figs. 2(A) to 5(D), structure of the shaft member 1 of the wheel rolling bearing device, and a method of manufacturing the wheel rolling bearing device A, using the shaft member 1 of the wheel rolling bearing device will be described.

Figs. 4(A) to 4(H) show a manner of forming the shaft member 1 of the wheel rolling bearing device from a shaft-shaped material 60 through respective steps, and Figs. 2(A) to 3 show a shape of the shaft member 1 of the wheel rolling bearing device which has been formed. Figs. 5(A) to 5(D) show steps for assembling the wheel rolling bearing device A, by assembling the outer ring 45, the inner ring 42 and so on to the shaft member 1 of the wheel rolling bearing device.

To start with, a method of producing the shaft member 1 of the wheel rolling bearing device will be described referring to Figs. 4(A) to 4(H).

The shaft member 1 of the wheel rolling bearing device which is described in this embodiment is produced through an annealing step, a coating step, a cold forging step, a turning step, a heat treating step, and a grinding step.

Prior to the annealing step, structural carbon steel such as S45C, S50C, S55C having a carbon content of about 0.5% in a substantially columnar shape is cut into a predetermined length thereby to form the shaft-shaped material 60 (See Fig. 4 (A)).

[1. Annealing step (Fig. 4(B))]

The annealing step is a step for heating the shaft-shaped material 60 with heat at a temperature higher than a transportation point (preferably, at the temperature higher than the transportation point by about 20°C to 70°C).

The carbon component in the shaft-shaped material 60 is spheroidized through the annealing step, and the shaft-shaped material 60 is spheroidized by annealing thereby to form an annealed shaft-shaped material 61 (See Fig. 4(B)). Tractility of this annealed shaft-shaped material 61 is enhanced than that of the shaft-shaped material 60.

[2. Coating step (Fig. 4(C))]

The coating step is a step for coating a surface of the annealed shaft-shaped material 61 with lubricating agent thereby to form a coated shaft-shaped material 62 having a lubricating agent coating 36 (See Fig. 4(C)).

For example, phosphate, as the lubricating agent, is applied to the surface of the annealed shaft-shaped material 61 thereby to form the coated shaft-shaped material 62 having the lubricating agent coating 36 (a phosphate coating).

Because of the lubricating agent coating 36 formed on the surface of the coated shaft-shaped material 62, frictional force which may occur between a mold for the cold forging and the material is decreased.

As described above, in the coated shaft-shaped material 62 which has passed through the annealing step and the coating step, the tractility is enhanced, and friction with the mold is decreased. In this manner, the material which is excellent in cold forgeability can be obtained.

[3. Cold forging step (Figs. 4(D) and 4(E)]

The succeeding cold forging step includes a primary cold forging step and a secondary cold forging step.

The primary cold forging step is a step for subjecting the coated shaft-shaped material 62 to a forward extrusion process, using a forging die apparatus (not shown) for the forward extrusion process in cold forging. Through this forward extrusion process, outer shapes of the shaft portion 10 (including the large diameter shaft portion 11, the small diameter shaft portion 12, and the shaft end portion 15), the intermediate shaft portion (including the flange base portion 20 and a part of the fitting shaft portion 30) 23, and the fitting shaft portion 30 are formed in the coated shaft-shaped material 62. In this primary cold forging step, a primary cold forged product 63 is formed by the forward extrusion process in cold forging (See Fig. 4(D)).

The secondary cold forging step is a step for subjecting the primary cold forged product 63 to a sideward extrusion process, using a forging die apparatus (not shown) for the sideward extrusion process in cold forging. By subjecting the primary cold forged product 63 to this sideward extrusion process, the forged recess 35 is formed at a center of an end face of the fitting shaft portion 30, and at the same time, a plurality of the flange portions 21 are radially formed on the outer peripheral face of the intermediate shaft portion 23 (the flange base portion 20) which is positioned between the shaft portion 10 and the fitting shaft portion 30. In this second cold forging step, a secondary cold forged product 64 is produced by the sideward extrusion process in cold forging (See Fig. 4(E)).

[4. Turning step (Fig. 4(G))]

The turning step is a step for turning a part of the secondary cold forged product 64, for example, the rotor supporting faces 22 on respective one side faces of the flange portions 21 and the end face 33 of the fitting shaft portion 30, and at the same time, drilling the bolt holes 24 in the flange portions 21, thereby to form a forged product 66 which has been turned (See Fig. 4(G)).

In this turning step, the lubricating agent coating 36 at least on the wheel fitting portion 32 (See Fig. 3) of the fitting shaft portion 30 in the secondary cold forged product 64 is not turned, but left.

Moreover, in this embodiment, the lubricating agent coating 36 is not also turned but left, on the faces of the flange portions 21 at an opposite side to the rotor supporting faces 22, the seal face 19 (corresponding to the adjacent outer peripheral face) which is formed adjacent to a shoulder of the first inner ring raceway face 18, a surface of the forged recess 35, and the end face of the shaft end portion 15 at the distal end of the small diameter shaft portion 12 of the shaft portion 10, as shown in Fig. 3. As the results, a range of the turning work is reduced, because the lubricating agent coating 36 is left, and the turning work can be easily performed in a shorter time.

Conventionally, in the turning step, the shaft end portion 15 for caulking the inner ring 42 is formed into a cylindrical shape, by opening a bore with a drill or the like through a rough drilling work, and by applying an inner bore finishing work with a lathe. However, in the wheel rolling bearing device A described in this embodiment, the shaft end portion 15 may be kept in a solid columnar shape . In this manner, the equipments, time, and cost can be further reduced, as compared with the prior art.

Moreover, even on the end face of the shaft end portion 15 at the distal end of the small diameter shaft portion 12 of the shaft portion 10, the lubricating agent coating 36 is not turned, but left. Therefore, frictional force with respect to the caulking jig is decreased in the caulking step, which will be described below, and the caulking work can be more easily performed.

[5. Heat treating step (Fig. 4(H))]

The heat treating step (hardening and tempering step) is a step for hardening the first inner ring raceway face 18 of the shaft portion 10 of the forged product 66 which has been turned, by induction hardening, and thereafter, tempering it thereby to form a heat-treated forged product 67 (See Fig. 4(H)). In this case, the induction hardening is not applied to the seal face 19, the outer peripheral face of the small diameter shaft portion 12, and the inner ring butting face 12a, intentionally (See Fig. 3). In this manner, a time for the heat treating step can be reduced . As shown in Fig. 3, a hardened layer S obtained by hardening and tempering is formed around the first inner ring raceway face 18.

In this embodiment, structural carbon steel having a relatively large amount of carbon and high hardness is used. Therefore, it is possible to secure a required strength, even though the induction hardening is not applied to a boundary portion between the shaft portion 10 and the flange portions 21 (the flange base portion 20) surrounding the seal face 19. Moreover, as shown in Fig. 1, the inner ring 42 is secured between the caulked portion 17 which is formed by caulking the shaft end portion 15 of the small diameter shaft portion 12 and the inner ring butting face 12a. Accordingly, an area of the inner ring butting face 12a is so set as to have such strength as capable of securing the inner ring 42 (the larger the area is, the higher the strength is).

[6. Grinding step]

The grinding step is a step for grinding the first inner ring raceway face 18 of the heat-treated forged product 67 thereby to form the shaft member 1 of the wheel rolling bearing device (See Fig. 3).

Then, referring to Figs. 5(A) to 5(D), a method of manufacturing (assembling) the wheel rolling bearing device A, using the shaft member 1 of the wheel rolling bearing device which has been produced through the above described steps will be described. Although in Figs. 5(A) to 5(D), a state after the hub bolts 27 have been press fitted to the shaft member 1 of the wheel rolling bearing device is shown, it is also possible to carry out the steps as shown in Figs. 5(A) to 5(D), before the hub bolts 27 are press fitted.

In the manufacturing method which will be described below, the wheel rolling bearing device A is manufactured through an outer ring assembling step, an inner ring assembling step, and a caulking step.

[7. Outer ring assembling step (Fig. 5(A))]

The outer ring assembling step is a step for fitting the outer ring 45 provided with a plurality of the first rolling elements 50 (including the cage 52) and the seal member 56 to the shaft member 1 of the wheel rolling bearing device which has been ground, from the shaft end portion 15. After the outer ring 45 has been fitted, the first rolling elements 50 are held so as to roll, between the first inner ring raceway face 18 which is formed on the outer peripheral face of the large diameter shaft portion 11 and the first outer ring raceway face 46 which is formed on the inner peripheral face of the outer ring 45.

[8. Inner ring assembling step (Fig. 5(B))]

The inner ring assembling step is a step for fitting the inner ring 42 provided with a plurality of the second rolling elements 51 (including the cage 53) to the shaft member 1 of the wheel rolling bearing device which has passed through the outer ring assembling step, from the shaft end portion 15 up to a position to be butted against the inner ring butting face 12a. After the inner ring 42 has been fitted, the second rolling elements 51 are held so as to roll, between the second inner ring raceway face 44 which is formed on the outer peripheral face of the inner ring 42 and the second outer ring raceway face 47 which is formed on the inner peripheral face of the outer ring 45.

[9. Caulking step (Fig. 5(C))]

The caulking step is a step for forming the caulked portion 17 in the shaft end portion 15 of the shaft member 1 of the wheel rolling bearing device which has passed through the inner ring assembling step. A caulking jig P is pressed against the shaft end portion 15 along the rotation axis of the shaft portion 10, and oscillated thereby to plastically deform the shaft end portion 15 into a shape which is enlarged in diameter outward in the radial direction. Thereafter, the oscillation of the caulking jip P is stopped, and a compression force is kept for a predetermined time thereby to form the caulked portion 17. As the results, an end face of the caulked portion 17 (a face perpendicular to the rotation axis of the shaft portion 10) is formed in a flat shape.

A shape of the caulking jig P will be described below.

Because the lubricating agent coating 36 is not turned in the above described turning step, but left on the end face of the shaft end portion 15 at the distal end of the small diameter shaft portion 12, the frictional force with respect to the caulking jig P is decreased, and hence, the caulking work can be more easily performed.

In order to prevent buckling (deformation) of the inner ring 42 and the inner ring butting face 12a, the compression force N for carrying out the caulking work is preferably so set as to satisfy the following formula.

$$\text{Compression force [N]} \leq \text{area of the inner ring butting face [mm}^2] * [500 \text{ N/mm}^2] \quad (\text{Formula 1})$$

As shown in Fig. 3, a protruding length L of the shaft end portion 15 (the small diameter shaft portion 12) protruding from the inner ring 42 before caulking is the length which has been set in advance.

Then, the caulking work is carried out so that a ratio of a protruding length L2 of the shaft end portion 15 protruding from the inner ring 42 after caulking with respect to the protruding length L1 of the shaft end portion 15 protruding from the inner ring 42 before caulking (L2/L1) may be, for example, 35% to 65%. In this manner, the wheel rolling bearing device A is completed.

Because the end face of the caulked portion 17 is formed in the flat shape, and the shaft end portion 15 before caulking has a solid columnar shape, it is possible to calculate the protruding length L1 before caulking from the outer diameter of the caulked portion 17 after caulking, the protruding length L2 of the caulked portion 17 after caulking, and the diameter of the small diameter shaft portion 12 (an inner diameter of the inner ring 42). (A volume of the protruded portion before caulking = a volume of the protruded portion after caulking) . Therefore, it is possible to obtain the ratio (L2/L1) from the wheel rolling bearing device A after caulking.

In order to perform the above described caulking (not caulking of "a cylindrical shape" but caulking of "a columnar shape"), it is preferable to satisfy the following condition.

For the purpose of enhancing the cold forgeability by lowering the hardness of the material, the spheroidizing annealing step ([1. Annealing step]) is carried out, using carbon steel having a carbon content of 0.50 to 0.85%. The carbon content of 0.50 to 0.85% is essential for enabling the carbon steel to be used as the raceway ring of the bearing. By carrying out this spheroidizing annealing treatment, the tactility of the material is enhanced, and the cold forging ([3. Cold forging step]) becomes able to be carried out. Because the tactility is enhanced to such an extent that the cold forging can be carried out, the caulking step can be easily performed.

By combining the three steps, namely, the spheroidizing annealing step, cold forging step, and caulking step, it becomes possible to easily and efficiently manufacture the wheel rolling bearing device, and cost reduction can be attained.

According to the method of manufacturing the wheel rolling bearing device which has been described in the embodiment, the structural carbon steel such as S45C, S50C, S55C is heated with the heat at the temperature higher than the transportation point thereby to form the annealed shaft-shaped material 61, in the annealing step of the shaft member of the wheel rolling bearing device. Then, in the succeeding coating step, the lubricating agent coating 36 is applied to the surface of the annealed shaft-shaped material 61, for the purpose of reducing the frictional force which occurs with respect to the mold for the cold forging, thereby to obtain the coated shaft-shaped material 62 having the excellent forgeability.

As the results, the caulking work can be easily carried out, even though the shaft end portion 15 (the small diameter shaft portion 12) is not formed in a hollow cylindrical shape, but formed in a solid columnar shape. Therefore, necessity of a mold for forming the shaft end portion 15 into the hollow cylindrical shape, a grinding work, and so on is eliminated. Accordingly, it becomes possible to easily and efficiently manufacture the wheel rolling bearing device, and cost reduction can be attained.

Moreover, the caulking work is carried out so that the ratio of the protruding length L2 of the shaft end portion 15 protruding from the inner ring 42 after caulking with respect to the protruding length L1 of the shaft end portion 15 protruding from the inner ring 42 before caulking (L2/L1) may be, for example, 35% to 65%. In this manner, a crack of the shaft end portion can be appropriately prevented, and at the same time, the inner ring 42 can be secured with a proper compression force (the compression force for pressing the inner ring 42 against the inner ring butting face 12a) (In case where the ratio is smaller than 35%, the crack is likely to occur, and in case where the ratio is larger than 65%, the compression force is insufficient) .

Further, because the solid columnar shape is enlarged in diameter by caulking, and a center portion of the caulked portion is not formed hollow, the rigidity of the caulked portion can be further enhanced.

Moreover, the structural carbon steel having relatively high hardness is used, and the area of the inner ring butting face 12a is appropriately set. As the results, it is possible to secure the required strength, even in case where the heat treatment is applied only to the first inner ring raceway face 18 of the shaft portion 10 in the heat treating step, but the heat treatment is not applied to the seal face 19, the outer peripheral face of the small diameter portion 12 and the inner ring butting face 12a intentionally. In this manner, the time for the heat treating step is reduced.

[First embodiment in the caulking step (Figs. 6(A) to 6(D))]

Then, referring to Figs. 6(A) to 6(D), the first embodiment in the caulking step will be described.

The first embodiment is characterized in a shape of a jig caulking face PM which is the caulking face of the caulking jig P. The jig caulking face PM has a conical shape having an obtuse vertical angle.

Fig. 6 (A) is a sectional view of the caulking jig P taken along a rotation axis ZP of the caulking jig P. In this embodiment, an inclination angle $\alpha$ which is an angle embraced between a face perpendicular to the rotation axis ZP and the jig caulking face PM is set to be about 5° (In this case, the vertical angle of the jig caulking face PM is about 170°).

It is also possible to set the inclination angle $\alpha$ within a range of about 5 to 10°, for example, in accordance with the oscillation angle of the caulking device.

As shown in Fig. 6(B) (before caulking) and Fig. 6(C) (after caulking), the shaft member 1 of the wheel rolling bearing device which has passed through the outer ring assembling step and the inner ring assembling step is held between a lower die K2 and an upper die K1. Then, an apex PC of the jig caulking face at the center of the jig caulking face PM is butted against a center 15C of a face 15M to be caulked, which is an end face of the shaft end portion 15, along the rotation axis ZC of the shaft member 1 of the wheel rolling bearing device . Thereafter, the caulking jig P is oscillated around the butted apex PC of the jig caulking face, while being rolled over the face 15M to be caulked thereby to spread the face 15M to be caulked outward in a radial direction.

The caulking jig P is inclined at an angle in accordance with a degree of the vertical angle. In this embodiment,

an inclination angle $\theta\alpha$ of the rotation axis ZP of the caulking jig P with respect to the rotation axis ZC of the shaft member 1 is set to be about 5°, that is, equal to the inclination angle $\alpha$ so that the face 15M to be caulked may be made flat after caulking (See Fig. 6(D)). In this case, the face 15M to be caulked is spread in a plane perpendicular to the rotation axis ZC, but the inclination angle $\theta\alpha$ is not limited to the same angle as the inclination angle $\alpha$.

Moreover, the inventor has confirmed by experiment that an appropriate relation is "$\phi b = \phi a +$ about 11mm", provided that an outer diameter of the shaft end portion 15 before caulking is $\phi a$, and the outer diameter of the shaft end portion 15 after caulking is $\phi b$.

In the first embodiment, by using the caulking jig P which has the jig caulking face PM of a simpler shape (the conical shape having the obtuse vertical angle), and by appropriately oscillating the caulking jig P, it is possible to easily caulk the shaft portion 10 having the solid columnar shape.

[Second embodiment in the caulking step (Figs. 7 (A) to 7(D))]

Then, referring to Figs. 7(A) to 7(D), the second embodiment in the caulking step will be described.

As compared with the first embodiment, the second embodiment is different in the shape of the jig caulking face PM of the caulking jig P. Specifically, the difference lies in that an edge inclined face PM2 which is reversed in an opposite direction is formed at an edge of the jig caulking face PM. This difference will be mainly described below.

Fig. 7 (A) is a sectional view of the caulking jig P taken along the rotation axis ZP of the caulking jig P. The jig caulking face PM has a conical shape having an obtuse vertical angle, and at the same time, has the edge inclined face PM2 which is formed by reversing an edge portion of an outer periphery of the conical shape from the conical face toward the vertical angle. The edge inclined face PM2 is formed continuously in a circumferential direction.

In this embodiment, the inclination angle $\alpha$ which is the angle embraced between the face perpendicular to the rotation axis ZP and the jig caulking face PM is set to be about 5° (In this case, the vertical angle of the jig caulking face PM is about 170°). An angle $\beta$ between the conical face around the vertical angle and the edge inclined face PM2 is set to be about 30°.

It is also possible to set the inclination angle $\alpha$ within a range of about 5 to 10°, for example, in accordance with the oscillation angle of the caulking device.

Moreover, the reversed angle $\beta$ may be set within a range of about 5 to 45°, for example.

In the same manner as in the first embodiment, the caulking jip P is inclined at the inclination angle $\theta\alpha$ (for example, about 5°), as shown in Fig. 7(B) (before caulking) and Fig. 7(C) (after caulking) . Then, the apex PC of the jig caulking face is butted against the center 15C of the face 15M to be caulked. Thereafter, the caulking jig P is oscillated around the butted apex PC of the jig caulking face, while being rolled over the face 15M to be caulked thereby to spread the face 15M to be caulked outward in the radial direction. It is to be noted that the inclination angle $\alpha$ and the inclination angle $\theta\alpha$ need not be necessarily the same.

In the second embodiment, as shown in Fig. 7(D), the edge portion of the caulked portion 17 is pressed by the edge inclined face PM2 toward the flange portions of the shaft portion, with a larger force than in a region near the center 15C of the face 15M to be caulked. Then, the edge of the face 15M to be caulked is formed in an inclined shape at an inclination angle $\beta1$ in accordance with the reversed angle $\beta$ of the edge inclined face PM2. At the same time, the inner ring 42 can be more rigidly secured.

In the second embodiment, the jig caulking face has such a shape that the edge inclined face PM2 is formed by reversing the edge portion of the conical shape toward the vertical angle, as compared with the shape of the jig caulking face in the first embodiment. By using the caulking jig having the jig caulking face of this simple shape, and by appropriately oscillating the caulking jig, it is possible to easily caulk the shaft portion having the solid columnar shape. Moreover, it is possible to caulk the edge portion of the face to be caulked by the edge inclined face PM2 with the stronger force, and hence, the inner ring 42 can be more rigidly secured.

[Third embodiment in the caulking step (Figs. 8(A) to 8(E))]

Then, referring to Figs. 8(A) to 8(E), the third embodiment in the caulking step will be described.

In the third embodiment, the edge of the face 15M to be caulked is chamfered in advance, as shown in Figs. 8(A) and 8(B), so that a circumferential face 17M of the caulked portion which is the circumferential face of the caulked portion 17 after caulking may become parallel to the rotation axis ZC of the shaft member 1 of the wheel rolling bearing device (See Fig. 8(C)). In this manner, a crack or the like on occasion of caulking is prevented.

In case where the shaft end portion 15 in the solid columnar shape (the edge portion is not chamfered) protruded from the inner ring 42 is caulked with the caulking jig as shown in Fig. 7(A), as described in the second embodiment as shown in Figs. 7 (A) to 7(D), a circumferential face 17Ma of the caulked portion is formed into an inclined shape (an overhung shape) with respect to the rotation axis ZC of the shaft member 1 of the wheel rolling bearing device, as shown by a dotted line in Fig. 8(C).

It is to be noted that in Fig. 8(C), the circumferential face 17Ma of the caulked portion is shown in a more largely inclined state than actual, for convenience of explanation.

In this case, the overhung portion does not contribute in securing the inner ring 42, and at the same time, cracks are likely to occur, because the overhung portion is spread in a larger diameter.

In view of the above, the edge of the face 15M to be caulked is chamfered in advance so that the overhung portion may not be formed after caulking. As the results, the circumferential face 17M of the caulked portion after caulking becomes parallel to the rotation axis ZC of the shaft member 1 of the wheel rolling bearing device. Moreover, the caulking work can be easily performed in initiation of caulking, because an area of the face 15M to be caulked is small in an earlier period of caulking.

An example of the chamfered shape is shown in Fig. 8(B). Herein, an inclined face which has been chamfered is called as a chamfered inclined face 15T. Provided that a length of the chamfered inclined face 15T from the face 15M to be caulked in a direction of the rotation axis ZC is a distance LB, a length from the face 15M to be caulked to the inner ring 42 in the direction of the rotation axis ZC is a distance LB, and an angle between the chamfered inclined face 15T and the rotation axis ZC is an inclination angle $\theta c$, the inventor has confirmed that a favorable result can be obtained by setting them as follows; the distance LA = about 8.5mm, the distance LB = about 4.0mm, and the inclination angle $\theta c$ is about 30°.

It is also possible to chamfer the edge portion of the shaft end portion 15 into a convex curved shape, as shown in Figs. 8(D) and 8(E). In this case too, the same effect as described above is obtained (the overhung portion is not formed after caulking, and occurrence of cracks can be prevented). In this case, an appropriate size between 1mm to 10mm, for example, may be selected as a diameter of an arc.

In the third embodiment, because the edge portion of the shaft end portion including the face 15M to be caulked is chamfered, it is possible to make the outer peripheral face of the caulked portion (the circumferential face 17Ma of the caulked portion) after caulking substantially parallel to the rotation axis ZC of the shaft portion. In this manner, a crack or so occurring by caulking is restrained, and the shaft portion having the solid columnar shape can be more adequately caulked.

[Fourth embodiment in the caulking step (Fig. 9)]

Then, referring to Fig. 9, the fourth embodiment in the caulking step will be described.

In the fourth embodiment, the shaft end portion 15 including the face 15M to be caulked is heated to an appropriate temperature, directly before caulking, for enabling the shaft end portion 15 to be easily plastically deformed. In this manner, occurrence of a crack or so during the caulking work is prevented, and a caulking time can be reduced.

As shown in Fig. 9, the shaft end portion 15 is induction heated before caulking, using an annular coil CL surrounding the shaft end portion 15. In this case, it is desirable to select the possible highest temperature within such a range that composition of the material for the shaft end portion 15 is not changed. In case of the shaft member 1 of the wheel rolling bearing device described in this embodiment, the shaft end portion 15 is desirably heated to 300 to 500°C.

As the results, the shaft end portion 15 is softened to become unlikely to be broken, and can be caulked in a shorter time. It is also possible to reduce load at the caulking time. In this case, the shaft end portion 15 can be made more unlikely to be broken, and life of the caulking jig P can be further prolonged.

In the forth embodiment, the shaft end portion 15 including the face 15M to be caulked is induction heated to the appropriate temperature thereby to become easily deformable, and thus, the shaft portion in the solid columnar shape can be more efficiently caulked without occurring cracks.

The wheel rolling bearing device and the method of manufacturing the same according to the invention are not limited to the production methods such as treatments, steps, nor to the outer appearances, constituents, structures, etc. which have been described in the embodiments, but various modifications, additions, deletions can be made within the scope of the invention as defined by the appended claims.

Moreover, the method of manufacturing the wheel rolling bearing device has been described in the embodiments, referring to a case where the shaft portion 10 is provided with the large diameter portion 11, the small diameter portion 12, and the inner ring butting face 12a. However, it is also possible to apply the method of manufacturing the wheel rolling bearing device which has been described in the embodiments to a case where the shaft portion is not provided with the large diameter portion 11, the small diameter portion 12, and the inner ring butting face 12a.

Moreover, in the description of the embodiments, the description has been made referring to a case where the shaft portion 10 has the first inner ring raceway face 18 which is formed on the outer peripheral face at a side close to the flange portions 21. However, the first inner ring raceway face 18 is not necessarily formed on the outer peripheral face of the shaft portion 10, but the inner ring in which the first inner ring raceway face 18 is formed may be fitted into the shaft portion 10. In this case, the first inner ring raceway face 18 is positioned at the side close to the flange portions 21 in the shaft portion 10.

Moreover, the numerical values which are used in the description of the embodiments are given only by example, and the invention is not limited to these numerical values and is defined by the claims.

Further, in the description of the embodiments an equal sign may be included or may not be included in the terms "above ($\geq$)", "below ($\leq$)", "larger (>)", "less (<)", etc.

Description of the Reference Numerals and Signs

| 1 | shaft member of wheel rolling bearing device |
|---|---|
| 10 | shaft portion |
| 11 | large diameter shaft portion |
| 12 | small diameter shaft portion |
| 12a | inner ring butting face |
| 15 | shaft end portion |
| 15C | center of face to be caulked |
| 15M | face to be caulked |
| 17 | caulked portion |
| 18 | first inner ring raceway face |
| 19 | seal face (adjacent outer peripheral face) |
| 20 | flange base portion |
| 21 | flange portion |
| 30 | fitting shaft portion |
| 36 | lubricating agent coating |
| 42 | inner ring |
| 44 | second inner ring raceway face |
| 45 | outer ring |
| 46 | first outer ring raceway face |
| 47 | second outer ring raceway face |
| 50 | first rolling element |
| 51 | second rolling element |
| A | rolling bearing device for wheel |
| L1, L2 | protruding length |
| P | caulking jig |
| PC | apex of jig caulking face |
| PM | jig caulking face |
| PM2 | edge inclined face |

**Claims**

1.  A method of manufacturing a wheel rolling bearing device, the wheel rolling bearing device provided with a shaft member (1) comprising:

    a shaft portion (10) having a solid columnar shape;
    a fitting shaft portion (30) which is coaxially formed at one end side of the shaft portion (10); and
    a flange portion (24) which is positioned between the shaft portion (10) and the fitting shaft portion (30), and which is extended outward in a radial direction,
    the method comprising:

    fitting an outer ring (45), which has a first outer ring raceway face (46) and a second outer ring raceway face (47) which are formed on an inner peripheral face thereof, to the shaft portion (10), and assembling a plurality of first rolling elements (50) between a first inner ring raceway face (18) and the first outer ring raceway face (46);
    fitting an inner ring (42), which has a second inner ring raceway face (44) which is formed on an outer peripheral face thereof, to the shaft portion (10), and assembling a plurality of second rolling elements (51) between the second inner ring raceway face (44) and the second outer ring raceway face (47) ; and
    pressing a caulking jig (P) against a face (15M) to be caulked, which is an end face of the shaft portion (10) having the solid columnar shape protruded from the inner ring (42) toward the other end side, and oscillating the caulking jig (P) while pressing the caulking jig (P) in a direction of the one end side of the shaft portion (10), thereby spreading and caulking the face (15M) to be caulked, **characterized in that**

a jig caulking face (PM) of the caulking jig (P) has a conical shape having an obtuse vertical angle, and includes an edge inclined face (PM2) in which an edge portion of an outer periphery of the conical shape is reversed with respect to a conical face toward the vertical angle, and
on occasion of caulking using the caulking jig (P),
inclining the caulking jig (P) with respect to a rotation axis (ZC) of the shaft portion (10) in accordance with a degree of the vertical angle of the jig caulking face (PM), butting an apex (PC) at a center of the jig caulking face (PM) against a center (15C) of the face (15M) to be caulked, and oscillating the caulking jig (P) around the apex (PC) which is butted, thereby spreading and caulking the face (15M) to be caulked of the shaft portion (10) having the solid columnar shape, and
pressing an edge of the face (15M) to be caulked which has been spread toward the one end side of the shaft portion (10) with the edge inclined face (PM2).

2. The method of manufacturing the wheel rolling bearing device according to claim 1, wherein
prior to caulking using the caulking jig (P),
forming the edge portion of the face (15M) to be caulked of the shaft portion (10) to have a rectilinearly chamfered shape so as to be an inclined face (15T) having a predetermined angle with respect to the rotation axis (ZC) of the shaft portion (10), or to have a chamfered shape so as to be a convex curved face.

3. The method of manufacturing the wheel rolling bearing device according to claim 1 or 2, wherein
on occasion of caulking using the caulking jig (P),
after heating a protruded portion of the shaft portion (10) from the inner ring (42) to a predetermined temperature by induction heating, caulking it.

**Patentansprüche**

1. Herstellungsverfahren für eine Radwälzlagervorrichtung, wobei die mit einem Wellenelement (1) vorgesehene Radwälzlagervorrichtung:

einen Wellenabschnitt (10), der eine feste säulenartige Form aufweist;
einen Passwellenabschnitt (30), der koaxial an einer Endseite des Wellenabschnitts (10) ausgebildet ist; und
einen Flanschabschnitt (24) aufweist, der zwischen dem Wellenabschnitt (10) und dem Passwellenabschnitt (30) angeordnet ist, und der sich in einer Radialrichtung nach außen erstreckt,
wobei das Verfahren aufweist:

Anbringen eines Außenrings (45), der eine erste Außenringlaufbahnfläche (46) und eine zweite Außenringlaufbahnfläche (47) hat, welche auf einer deren Innenumfangsfläche ausgebildet sind, an den Wellenabschnitt (10), und Zusammenbauen einer Vielzahl von ersten Wälzelementen (50) zwischen einer ersten Innenringlaufbahnfläche (18) und der ersten Außenringlaufbahnfläche (46);
Anbringen eines Innenrings (42), der eine zweite Innenringlaufbahnfläche (44), die auf einer deren Außenumfangsfläche ausgebildet ist, an den Wellenabschnitt (10), und Zusammenbauen einer Vielzahl von zweiten Wälzelementen (51) zwischen der zweiten Innenringlaufbahnfläche (44) und der zweiten Außenringlaufbahnfläche (47); und
Pressen einer Verstemmvorrichtung (P) gegen eine zu verstemmende Fläche (15M), die eine Endfläche des Wellenabschnitts (10) mit der festen säulenartigen Form ist, die zur anderen Endseite hin vom Innenring (42) vorsteht, und Oszillieren der Verstemmspannvorrichtung (P) beim Pressen der Verstemmspannvorrichtung (P) in einer Richtung der einen Endseite des Wellenabschnitts (10), wodurch die zu verstemmende Fläche (15M) gespreizt und verstemmt wird, **dadurch gekennzeichnet, dass**

eine Vorrichtungsverstemmfläche (PM) der Verstemmspannvorrichtung (P) eine konische Form hat, die einen stumpfen Vertikalwinkel hat, und eine Fläche mit geneigt verlaufender Kante (PM2) aufweist, auf der ein Kantenabschnitt des Außenumfangs der konischen Form in Bezug auf eine konische Fläche zum Vertikalwinkel hin umgekehrt ist, und
beim Verstemmen unter Verwendung der Verstemmvorrichtung (P),
Neigen der Verstemmvorrichtung (P) in Bezug auf eine Drehachse (ZC) des Wellenabschnitts (10) gemäß einem Grad des Vertikalwinkels der Vorrichtungsverstemmfläche (PM), stoßen eines Scheitels (PC) an einer Mitte der Vorrichtungsverstemmfläche (PM) gegen eine Mitte (15C) der zu verstemmenden Fläche (15M), und Oszillieren der Verstemmvorrichtung (P) um den Scheitel (PC), der gestoßen ist, wodurch die zu verstemmende Fläche (15M) des Wellenabschnitts (10) mit der festen säulenartigen Form gespreizt und verstemmt wird, und Pressen einer Kante der zu verstemmenden Fläche (15M), die zur anderen Endseite des Wellenabschnitts (10) mit der Fläche mit geneigt verlaufender Kante (PM2) hin gespreizt wurde.

2. Herstellungsverfahren für die Radwälzlagervorrichtung nach Anspruch 1, wobei
vor dem Verstemmen unter Verwendung der Verstemmvorrichtung (P),
Bilden des Kantenabschnitts der zu verstemmenden Fläche (15M) des Wellenabschnitts (10), um eine geradlinig abgeschrägte Form zu haben, sodass sie eine geneigte Fläche (15T) mit einem vorbestimmten Winkel in Bezug auf die Drehachse (ZC) des Wellenabschnitts (10) ist, oder um eine abgeschrägte Form zu haben, sodass sie eine konvex gekrümmte Fläche ist.

3. Herstellungsverfahren für die Radwälzlagervorrichtung nach Anspruch 1 oder 2, wobei
beim Verstemmen unter Verwendung der Verstemmvorrichtung (P),
nach Erwärmen eines vom Innenring (42) vorstehenden Abschnitts des Wellenabschnitts (10) auf eine vorbestimmte Temperatur durch Induktionserwärmung, Verstemmen des Abschnitts.

**Revendications**

1. Procédé de fabrication d'un dispositif de palier à roulement de roue, le dispositif de palier à roulement de roue étant pourvu d'un élément d'arbre (1) comprenant :

une partie d'arbre (10) ayant une forme de colonne solide ;
une partie d'arbre de raccordement (30) qui est formée de manière coaxiale à un côté d'extrémité de la partie d'arbre (10) ; et
une partie de bride (24) qui est positionnée entre la partie d'arbre (10) et la partie d'arbre de raccordement (30) et qui est étendue vers l'extérieur vers une direction radiale,
le procédé comprenant les étapes consistant à :

raccorder une bague externe (45), qui a une première face de chemin de roulement de bague externe (46) et une seconde face de chemin de roulement de bague externe (47) qui sont formées sur une face périphérique interne de celle-ci, à la partie d'arbre (10) et monter une pluralité de premiers éléments de roulement (50) entre une première face de chemin de roulement de bague interne (18) et la première face de chemin de roulement de bague externe (46) ;
raccorder une bague interne (42), qui a une seconde face de chemin de roulement de bague interne (44) qui est formée sur une face périphérique externe de celle-ci, à la partie d'arbre (10) et monter une pluralité de seconds éléments de roulement (51) entre la seconde face de chemin de roulement de bague interne (44) et la seconde face de chemin de roulement de bague externe (47) ; et
presser un gabarit de calfeutrage (P) contre une face (15M) à calfeutrer, qui est une face d'extrémité de la partie d'arbre (10) ayant la forme de colonne solide en saillie à partir de la bague interne (42) vers l'autre côté d'extrémité, et faire osciller le gabarit de calfeutrage (P) tout en pressant le gabarit de calfeutrage (P) dans une direction du côté d'extrémité de la partie d'arbre (10), propageant et calfeutrant de ce fait la face (15M) à calfeutrer, **caractérisé en ce que**

une face de gabarit de calfeutrage (PM) du gabarit de calfeutrage (P) a une forme conique ayant un angle vertical obtus, et comprend une face au bord incliné (PM2) dans laquelle une partie de bord d'une périphérie externe de la forme conique est inversée par rapport à une face conique vers l'angle vertical, et
à l'occasion d'un calfeutrage à l'aide du gabarit de calfeutrage (P),
incliner le gabarit de calfeutrage (P) par rapport à un axe de rotation (ZC) de la partie d'arbre (10) conformément à un degré de l'angle vertical de la face de gabarit de calfeutrage (PM), amener en butée un sommet (PC) à un centre de la face de gabarit de calfeutrage (PM) contre un centre (15C) de la face (15M) à calfeutrer, et faire osciller le gabarit de calfeutrage (P) autour du sommet (PC) qui est en butée, propageant et calfeutrant de ce fait la face (15M) à calfeutrer de la partie d'arbre (10) ayant la forme de colonne solide, et
presser un bord de la face (15M) à calfeutrer qui a été propagé vers le côté d'extrémité de la partie d'arbre (10) avec la face au bord incliné (PM2).

2. Procédé de fabrication du dispositif de palier à roulement de roue selon la revendication 1, dans lequel avant de calfeutrer à l'aide du gabarit de calfeutrage (P),
former la partie de bord de la face (15M) à calfeutrer de la partie d'arbre (10) pour avoir une forme chanfreinée de manière rectiligne de façon à être une face inclinée (15T) ayant un angle prédéterminé par rapport à l'axe de rotation (ZC) de la partie d'arbre (10), ou d'avoir une forme chanfreinée de façon à être une face incurvée convexe.

3. Procédé de fabrication du dispositif de palier à roulement de roue selon la revendication 1 ou 2, dans lequel à l'occasion d'un calfeutrage à l'aide du gabarit de calfeutrage (P),
calfeutrer une partie en saillie de la partie d'arbre (10) à partir de la bague interne (42), après l'avoir chauffée à une température prédéterminée par un chauffage par induction.

## FIG.1

INSIDE OF VEHICLE ⟷ OUTSIDE OF VEHICLE

FIG.2(A)

FIG.2(B)

FIG.3

FIG.4(B)

FIG.4(C)

FIG.4(A)

FIG.4(D)

FIG.4(E)

FIG.4(G)

FIG.4(H)

FIG.5(A)

FIG.5(B)

FIG.5(C)

FIG.5(D)

FIG.6(A)

FIG.6(B)

FIG.6(C)

FIG.6(D)

FIG.7(A)

FIG.7(B)

FIG.7(C)

FIG.7(D)

FIG.8(B)

FIG.8(A)

FIG.8(C)

FIG.8(D)

FIG.8(E)

FIG.9

*FIG.10(A)*

*FIG.10(B)*

**EP 2 684 626 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006111070 A
- JP 2007268690 A
- JP 2001017051 A